# EUROPEAN PATENT SPECIFICATION

(11) **EP 3 104 636 B1**
(45) Date of publication and mention of the grant of the patent: **27.10.2021**
(21) Application number: 15305917.5
(22) Date of filing: 12.06.2015
(51) Int. Cl.: H04W 16/10, H04W 84/00, H04W 84/12, H04W 36/00

(54) **IMPROVED WIFI COMMUNICATION SYSTEM FOR THE EXCHANGE OF DATA BETWEEN A RAILWAY VEHICLE AND A GROUND TERMINAL**
VERBESSERTES WIFI-KOMMUNIKATIONSSYSTEM ZUM DATENAUSTAUSCH ZWISCHEN EINEM EISENBAHNFAHRZEUG UND EINEM ERDUNGSANSCHLUSS
SYSTÈME DE COMMUNICATION WIFI AMÉLIORÉ POUR UN ÉCHANGE DE DONNÉES ENTRE UN VÉHICULE FERROVIAIRE ET UNE BORNE DE MASSE

(43) Date of publication of application: 14.12.2016
(73) Proprietor: ALSTOM Transport Technologies, 93400 Saint-Ouen (FR); Neratec Solutions AG, 8608 Bubikon (CH)
(72) Inventor: Fayt, Etienne, 7020 Nimy (BE); Vetillard, Jean-Noël, 69003 Lyon (FR); Harju, Jussi, 8620 Wetzikon (CH); Honegger, Markus, 8405 WINTERTHUR (CH); Sporndli, Mark, 8105 Regensdorf (CH); Dubonik, Wojciech, 8632 Tann (CH)
(74) Representative: Lavoix

(56) References cited:
- WO-A1-2011/034851
- WO-A1-2013/178440
- WO-A2-2010/088586
- US-A1- 2013 242 940

## Description

The present invention relates to a WiFi communication system for the exchange of data between a railway vehicle, travelling over a railway network, and a terminal, on the ground, with a frequency band allocated to the system being subdivided into a plurality of channels, of the type comprising
- a mobile unit, on board the railway vehicle, designed for transmitting and receiving radio signals in a current operating channel; and,
- a cellular infrastructure, on the ground, comprising, connected to each other by means of a communication network :
   - a plurality of access points, each access point being capable of transmitting and receiving radio signals and, in particular, transmitting beacons for establishing or maintaining a communication link, on a current operating channel between said access point and a mobile unit, , which is adjustable;
   - at least one interference detection device for detecting interferences, which is capable of identifying the channels of the frequency band that are unusable and
   - at least one frequency management device for managing frequencies which is capable of assigning, based on the unusable channels, a current operating channel to each access point.

In the following sections of this description, a WiFi device is a device that complies with all of the IEEE 802.11 standards.

The frequency band is subdivided into a plurality of channels Fi, which are preferably non-adjacent and of the same width.

The term "railway vehicle" is used to refer to any vehicle that is capable of travelling over a railway network, such as a passenger train, a freight train, a tram, a subway train, etc.

WiFi communication systems are known in which the operating channel of each access point of a cellular communication infrastructure is assigned during the deployment of the system and cannot be modified during the course of operation of that system.

However, the frequency band allocated to the WiFi communication system is also used by other radio frequency devices. This includes, for example, the radars with which meteorological satellites are equipped, or radars for tracking aircraft. The radio waves generated by these external sources, outside the system, can interfere with ongoing communication taking place within the system. The consequence thereof is degradation in the quality of the data exchanges between the on board and trackside pieces of equipment. Conversely, the signals generated by the WiFi communication system may cause interference with the radars of these other devices, what should be avoided because these other devices are considered to be the primary users of the frequency band.

In order to prevent such interferences, there are known WiFi communication systems which implement a dynamic frequency management. More precisely, such a system comprises a interference detection device capable of measuring, for each of the channels of the frequency band allocated to the system, the power of the electromagnetic signals incident on the system and generated by sources external to the system. When the power in a channel exceeds a predetermined threshold level, the corresponding channel is made unusable for the access points of the system, during a predetermined time period. The system includes a frequency management device which updates a frequency allocation plan, on the basis of information transmitted by the interference detection device. The frequency allocation plan associates with the identifier of each of the access points of the system, a current operating channel, which is selected among the channels of the frequency band allocated to the system from which the channels that are unusable at the time being have been removed. When the current operating channel associated with an access point is modified in the frequency allocation plan, the frequency management device transmits an appropriate message to this access point in order to inform it that it has now to operate in a new channel that has just been assigned to it.

However, such a system has the following disadvantage.

The radio electric range of the radio module equipping an access point defines a coverage cell for that access point.

In order to ensure continuity of the coverage of the cellular infrastructure, the coverage cell of an access point partially overlaps the coverage cell of one or more neighbouring access points.

In the zone of overlap between a first cell and a second cell, the mobile equipment must establish a link with the second access point associated with the second cell before the current link with the first access point associated with the first cell is broken.

In order to do this, with the operating channel of the second access point not being known since it is dynamically modified by the frequency management device based on the interference experienced, the mobile equipment has to go through all the channels of the frequency band allocated to the system so as to seek out the operating channel on which the second access point is operating at the current time.

Once the mobile equipment unit has detected the beacons emitted by the second access point, it still has to establish a new link with this second access point before being able to switch the communication that is going on, from the current link with the first access point on to the new link with the second access point.

The time required to scan the frequency band in the search for the beacons from the second access point is quite significant. It considerably increases the total transfer time required for the switching of the communication in progress over to the new link. There is therefore a risk of the current link being broken before the new link can be established, thus leading to the discontinuing of the communication between the on board and trackside pieces of equipment.

The total time of communication transfer that is encountered in the known WiFi communication systems is incompatible with the use of such a system in critical applications, such as for example, the management, in a safe and secure manner, of the circulation of vehicles over a railway network, these being applications for which a discontinuity in the communication between the on board and trackside pieces of equipment cannot be tolerated. The patent application US2013/242940 shows another system that allocates channels among access points.

The invention therefore aims to overcome this problem.

To this end, the object of the invention is to provide an enhanced communication system and a method according to the claims.

The invention and its advantages will be better understood upon reading the description which will follow, provided solely by way of example with reference made to the accompanying drawings in which
- Figure 1 is a general schematic representation of the WiFi communication system;
- Figure 2 is a modular representation of an on board equipment unit of the system shown in Figure 1;
- Figure 3 is a modular representation of an access point of the cellular infrastructure of the system shown in Figure 1;
- Figure 4 is a modular representation of an interference detection device of the system shown in Figure 1; and
- Figure 5 is a modular representation of a frequency management device of the system shown in Figure1.

### SYSTEM

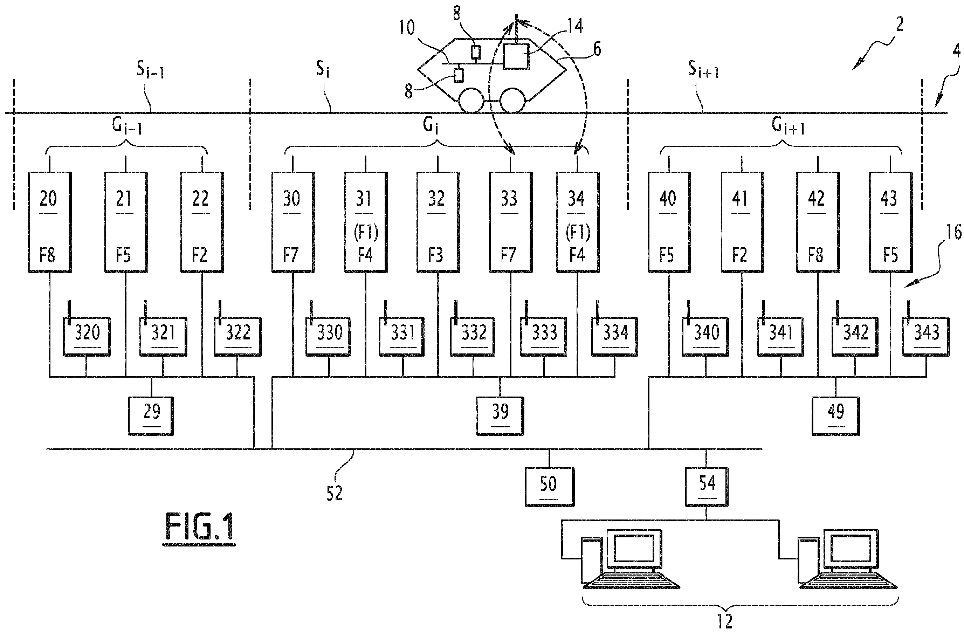

Figure 1 shows a WiFi communication system 2 for the exchange of data between trains, circulating on a railway network, and computers, located on the ground.

The railway network is referenced in a general manner by numeral 4. It is virtually subdivided into a plurality of contiguous sections. For example, a first section of the network corresponds to a workshop for train maintenance a second section, to a station a third, to a passage through a tunnel etc. In Figure 1, three successive sections, Si-1, Si and Si+1 are represented.

For the purposes of clarity, only one train is shown in Figure 1. It is referenced by numeral 6.

On board the train 6, various computers 8 are connected to a local area network 10. Computers 8 are for example computers for performing functions related to train control. They transmit data to a ground based terminal 12 (position, speed, state, etc.) and receive route and motion authorisation from this terminal 12.

The terminal 12 consists of one or more computers capable of supervising, in a safe and secure manner, the circulation of trains over the network 4.

The computers 8 on board the train 6 exchange data with the terminal 12 via the system 2.

The system 2 includes a mobile component and a fixed component.

The mobile component is constituted of a plurality of mobile units, each train 6 being equipped with one mobile unit 14. The mobile unit 14 provided on board a train 6 is connected to the train local area network 10.

The fixed component, on the ground, consists of a radio infrastructure 16 for cellular radio communication. The terminal 12 is connected to infrastructure 16.

The infrastructure 16 includes a plurality of access points. In Figure 1, a dozen of access points are represented. They are referenced from 20 to 22, 30 to 34 and 40 to 43.

Each access point is capable of establishing a temporary WiFi link with a mobile unit 14, when this mobile unit is located within a coverage cell associated with this access point.

At a given time, an access point operates on an operating channel Fi of the frequency band, said operating channel having been dynamically assigned to this access point.

The coverage cells of the different access points of the infrastructure 16 overlap each other, in a manner so as to cover, in a progressive manner, the entire railway network 4. As a consequence a mobile unit 14 can be connected to an access point of the infrastructure 16 whatever its position on the railway network 4. A mobile unit 14 also has the ability to exchange data with the terminal 12 substantially continuously while the train 6 is moving, by establishing, before the breaking of an active link with a first access point, a new link with a second access point, the first and second access points being neighbours.

Two access points shall be called "neighbours" when the coverage cell of one of the access points partially overlaps that of the other.

One access point belongs to the "neighbourhood" of a first access point when it is a neighbour of the first access point or when it is a neighbour of a second access point that is itself a neighbour of the first access point.

The access points the coverage cells of which predominantly cover the same section of the railway network 4 are grouped together within a group of access points. Thus, in Figure 1, the access points 20, 21 and 22, of which the cells cover the section Si-1, belong to the group G-1; the access points 30, 31, 32, 33 and 34, of which the cells cover the section Si, belong to the group Gi; and the access points 40, 41, 42 and 43, of which the cells cover the section Si+1, belong to the group Gi+1.

The number of access point in a group varies from one section to the other, based on, for example, the length of this section, the average train frequency on this section, the desired quality of the onboard to ground communication along this section, etc.

The infrastructure 16 includes a plurality of interference detection devices. In the embodiment shown in Figure 1, each access point is associated with one interference detection device.

Thus, the access points 20, 21, 22, are respectively associated with the interference detection devices 320, 321, 322; the access points 30, 31, 32, 33, 34, are associated with the interference detection devices 330, 331, 332, 333, 334; and the access points 40, 41, 42, 43, with the interference detection devices 340, 341, 342, 343.

The infrastructure 16 includes a plurality of frequency management devices. In the embodiment shown in Figure 1, one frequency management device is associated with each group of access points.

Thus, the group G-1 includes the frequency management device 29; the group Gi includes the frequency management device 39; and the group Gi+1, the frequency management device 49.

The interference detection device associated with an access point is geographically located in the vicinity of this access point.

The interference detection device continuously measures the power level of the radio signals received on each channel among a plurality of channels that it monitors. The channels to be monitored include the operating channel of the access point associated with the interference detection device considered, as well as a minimum of three other channels.

In the event of the power level in a channel being greater than a threshold value, the interference detection device is capable of updating a report of interferences indicating that this channel is unusable.

The interference detection device of an access point is capable of sending, at regular intervals, a report of interferences to the frequency management device responsible for the group of access points that access point belongs to.

The interference detection device of an access point is capable of receiving a list of channels to be monitored, from the frequency management device responsible for the group of access points that access point belongs to.

The frequency management device of a group of access points is designed so as to dynamically assign an operating channel to each of the access points of this group, during the course of operation of the system 2. To this end, the frequency management device of a group of access points is capable of taking into account the channels identified as unusable by the interference detection devices of the group of access points.

The infrastructure 16 also includes a control unit 50, whose function consists in supervising the behaviour of the infrastructure 16 and allowing an operator to modify this behaviour, when necessary.

The infrastructure 16 includes a wired local area communication network 52, supporting the TCP/IP protocol (Transmission Control Protocol/Internet Protocol), that connects together the access points, the interference detection devices, the frequency management devices, and the control unit 50, as well as a router 54 forming a gateway for the communication with the terminal 12.

### MOBILE UNIT

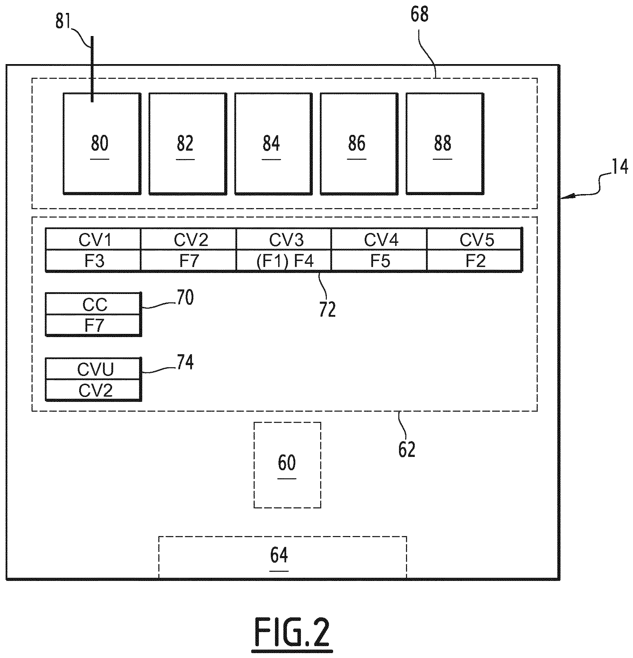

The mobile unit 14 will now be described in detail with reference to Figure 2.

The mobile unit 14 is a computer which comprises, in addition to a processor 60, a memory 62 and an input/output interface 64 for connecting with the local area network 10 of the train 6, a radio transmission/reception means 68 for transmitting/receiving radio frequency waves.

The memory 62 includes a space 70 storing the current operating channel CC used by the transmission/reception means 68. In Figure 2, the current operating channel is the channel F7.

The memory 62 includes an onboard association table 72 that associates with each virtual channel CVi of a set of N + 2 virtual channels, a channel Fi of the frequency band. N is predetermined in order for the table 72 to have a reduced length. Thus, N is less than 10, preferably less than 5, for example equal to 3. In the preferred embodiment, the table 72 includes five columns, corresponding to a set of five virtual channels, CV1 to CV5, as represented in Figure 2. The table 72 is updated during the course of the movement of the train 6 along the network 4 as will be described here below.

The memory 62 also includes a zone 74 storing the virtual channel CVU used to establish the current active link. In Figure 2 the virtual channel used is the channel CV2.

The transmission/reception means 68 includes a radio module 80, having an antenna 81, a beacon module 82, a channel adjustment module 84, a link detection module 86 for the detection of the state of the current link, and a channel search module 88 for searching for a channel on which to establish a new link.

The radio module 80 is designed for the transmission and reception, by means of the antenna 81, of radio communication signals whose frequency is situated within the current operating channel CC of the radio module 80. This current channel is indicated in the space 70 of the memory 62.

In particular, the radio module 80 is capable of receiving beacons, transmitted by an access point, in order to establish a new link or maintain the current link. The radio module 80 is capable of transferring a beacon received to the beacon module 82.

The radio module 80 is designed for periodically indicating to the link detection module 86 the power of the beacons received from the access point with which the current link is established.

The beacon module 82 is capable of extracting the data items contained in a beacon transferred to it by the radio module 80.

The beacon module 82 is capable of managing the establishment or the maintenance of a link with the access point which is the sender of the beacon, in accordance with a predetermined protocol.

Furthermore, the beacon module 82 is designed for extracting from a beacon information related to the assignment of virtual channels and for updating, on the basis of this information, the onboard assignment table 72.

Once a new link is established, the module 82 is also capable of transmitting a "connection established" message to the channel search module 88 responsible for searching for a channel on which to establish a new link.

The channel adjustment module 84 is designed for adjusting the operating channel of the radio module 80 on the channel indicated in the space 70 of the memory 62. When an entry is written in the space 70 for modifying the content thereof, the module 84 is executed in a manner so as to appropriately adjust the radio module 80.

The link detection module 86 for detecting the state of the current link is designed for detecting an impending breaking of the current active link. The module 86 is capable of comparing the power measured by the radio module 80 with a power threshold below which the module 86 is designed to launch the execution of the channel search module 88.

The module 88 is designed to search for a channel on which to establish a new link, when the module 86 detects the impending breaking of the current link.

The module 88 is capable of reading, in the zone 74 of the memory 62, the virtual channel CVU used for establishing the current link, that is to say, the link that is about to be broken.

The module 88 is designed to extract from the table 72 the channel Fi associated with the virtual channel CVi which follows the virtual channel CVU indicated in the zone 74 (CVi=CVU+1). The channel Fi thus extracted is then written in the space 70.

This will have the effect of launching the execution of the adjustment module 84 of the current operating channel of the radio module 80.

The module 88 is designed to wait for the reception of a "link established" message being sent by the beacon module 82.

Upon the reception of such a message, the module 88 is designed to write into the zone 74, the identifier CVi of the virtual channel used with success for the establishment of the new link.

However, beyond a predetermined wait time period T, if no "link established" message has been received, the module 88 is designed to repeat the preceding steps for the subsequent virtual channel, CVi+1, in the table 72.

If, in the table 72, the null value is associated with a virtual channel, the module 88 immediately passes on to the next virtual channel in the table 72. When it comes to the end of the table 72, the module 88 is capable of returning to the beginning of the table 72.

The module 88 is thus capable of going through the table 72 until the establishment of a new link with an access point is achieved.

### ACCESS POINT

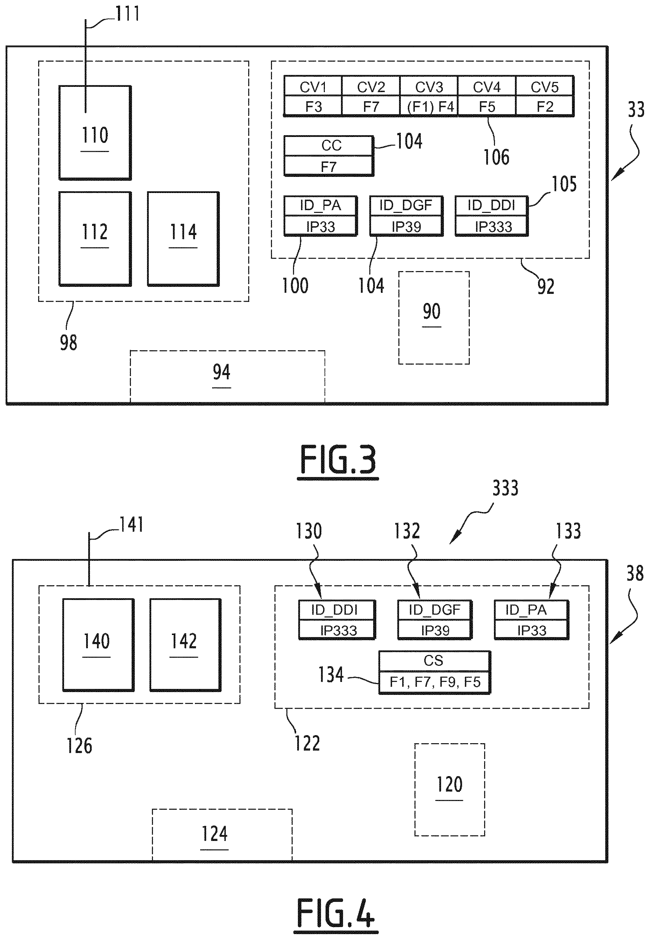

An access point will now be presented in detail with reference to Figure 3. More particularly consideration will be given by way of an example to the access point 33 of the group Gi.

The access point 33 is a computer which includes, in addition to a processor 90, a memory 92 and an input/output interface 94 for the connection to the local area network 52, a transmission/reception means 98 for transmitting/receiving radio frequency waves.

The memory 92 includes a memory zone 100 storing an identifier ID_PA of the access point 33. The identifier of an access point, such as the access point 33, is the IP address, IP33, of the access point on the local area network 52.

The memory 92 includes a memory zone 102 storing an identifier ID_DGF of the frequency management device 39 for the group Gi to which the access point 33 belongs. The identifier of a frequency management device, such as the device 39, is the IP address, IP39, of this device on the local area network 52.

The memory 92 includes a memory zone 105 storing an identifier ID-DDI of the interference detection device 333 associated with the access point 33. The identifier of an interference detection device, such as the device 333, is the IP address, IP333, of this device on the local area network 52.

The memory 92 includes a space 104 storing the identifier CC of the current operating channel of the access point 33. For example, the current operating channel of the access point 33 is the channel F7.

The memory 92 includes a virtual channel association table 106. The table 106 associates with each virtual channel CVi of the set of N + 2 virtual channels, the identifier Fi of a channel of the frequency band. The table 106 is regularly updated during the course of use of the system 2. The generation of the table 106 will be described here below.

The means 98 comprises of a radio module 110 including an antenna 111, a channel adjustment module 112 for setting/adjusting the current operating channel of the radio module 110, and a module 114 for preparing beacons.

The radio module 110 is capable of receiving and transmitting radio signals. In particular, the radio module 110 is capable of periodically transmitting beacons in order for a mobile unit 14 located within the coverage cell associated with the access point 33 to be able to establish a link or maintain a link with this access point.

The transmission of beacons continues in parallel with the exchange of data along an existing link between the access point 33 and a mobile unit 14.

The radio module 110 operates on the current operating channel indicated in the space 104 of the memory 92. This current operating channel is adjustable and is dynamically assigned to the access point 33 by the frequency management device 39.

The channel adjustment module 112 is capable of adjusting the operating channel of the radio module 110. In order to do this, the module 112 is capable of reading the current operating channel CC mentioned in the space 104 of the memory 92.

The module 114 for preparing beacons is, among other things, capable of reading the table 106 and preparing a beacon embedding the association information extracted from the table 106. The beacon is transferred to the radio module 110 which periodically emits it by way of a beacon signal.

### INTERFERENCE DETECTION DEVICE

An interference detection device will now be presented in detail, with reference to Figure 4. More particularly consideration will be given, by way of an example, to the device 333 for the group Gi associated with the access point 33.

The device 333 is a computer that includes, in addition to a processor 120, a memory 122, an input/output interface 124 for the connection to the local area network 52, and a means 125 for detecting interferences.

The memory 122 includes a zone 130 storing the identifier ID_DDI of the interference detection device 333, which consists of the IP address, IP333, of this device.

The memory 122 includes a zone 132 storing the identifier ID_DGF of the frequency management device 39 for the group Gi to which the device 333 belongs. This identifier consists of the IP address, IP39, of the device 39 on the local area network 52.

The memory 122 also includes a zone 133 storing the identifier ID_PA of the access point 33 with which the device 333 is associated.

The memory 122 finally includes a list 134 of channels to be monitored. The list 134 includes the current operating channel F7 of the access point 33, as well as three other channels, F1, F9 and F5.

The interference detection means 126 includes a power detection module 140, provided with an antenna 141, and a module 142 for the update and transmission of a report of interferences.

The module 140 is designed to measure, for each channel in the list 134, the total power of the signals incident on the antenna 141, whose frequency is within the channel considered.

At the end of each cycle of operation, the module 140 launches the execution of the module 142.

The module 142 is designed to update a report of interferences. A report of interferences includes the identifiers of the or each monitored channel for which the total power is greater than a predetermined threshold value, as well as the current date.

The module 142 is designed for transmitting a message including the said report of interferences to the frequency management device of the group.

### FREQUENCY MANAGEMENT DEVICE

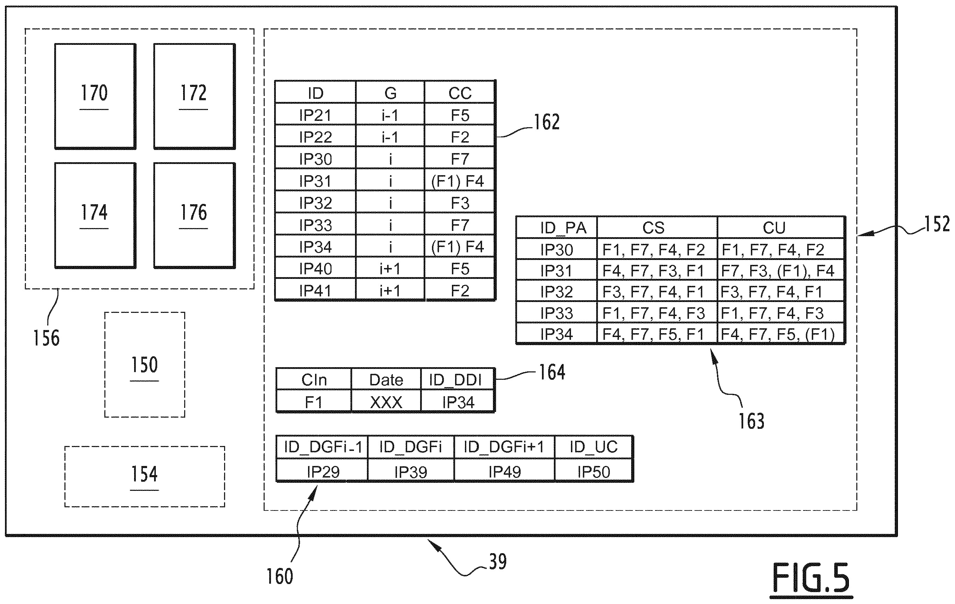

A frequency management device will now be presented in detail, with reference to Figure 5. More particularly consideration will be given, by way of an example, to the device 39 for the group Gi.

One such device is a computer which includes, in addition to a processor 150, a memory 152 and an input/output interface 154 for connecting to the local area network 52, a means for management of frequencies 156.

The memory 152 contains a list 160 mentioning the identifiers ID_DGFi of the device 39, ID_DGFi-1 and ID_DGFi+1 of the frequency management devices 29 and 49 of the neighbouring groups Gi-1 and Gi+1, as well as the identifier ID_UC of the control unit 50.

The memory 152 includes a frequency allocation plan 162 mentioning:
- the identifiers of the access points of the group Gi, and of the neighbouring groups Gi-1 and Gi+1;
- a geographical position data relative to each access point, that makes it possible to determine whether it is an access point situated at the end of a section or an access point situated in the neighbourhood of an access point that is situated at the end of a section (the manner in which the plan 162 is ordered is one way of providing this data); and
- the operating channel assigned, at the current time, to each of the access points.

The memory 152 includes a table 164 of unusable channels Cln. This table mentions, for each channel identified as being unusable, the identifier of this channel, the date on which it has been detected as being unusable, as well as the identifier ID_DDI of the interference detection device that has carried out this detection.

The memory 152 also includes a table 163 that mentions, for each access point ID_PA, the channels to be monitored CS by the interference detection device ID_DDI associated with the access point considered, and the usable channels CU, which may be allocated to the access point considered in the event of the detection of interferences.

The frequency management means 156 for dynamically managing frequencies includes a module 170 for collecting the report of interferences related messages, a module 172 for updating the frequency allocation plan 162, a module 174 for the generation of onboard allocation tables 72 for the various access points that belong to the group Gi which is managed by the device 39, and a communication module 176 for communicating with the control unit 50 and the frequency management devices 29 and 49, of the neighbouring groups, Gi-1 and Gi+1.

The module 170 performs the update of the table 164 mentioning the unusable channels Cln, on the basis of the messages received from the modules 142 of the interference management devices 330 to 334.

More precisely, the module 170 is capable of collecting the messages sent by the interference detection devices of the group Gi. Based on the payload of these messages, the module 170 is capable of updating the table 164 of unusable channels Cln. If the identifier of the unusable channel is already in the table 164, the module 170 updates the date; on the contrary, if there is a channel newly identified as unusable, the module 170 is capable of adding a row to the table 164 with the identifier of this channel and the date, as well as the identifier of the interference detection device, indicated in the status alert message.

The module 170 is capable of deleting from the table 164 the row relative to a channel whose date value is older than a predetermined value. This makes it possible to reuse a channel, after a certain waiting period has elapsed without further detection of interferences.

The module 170 is also capable of performing the update of the table 163 mentioning the usable channels CU, based on the contents of the table 164.

When the table 163 is modified, the module 172 for updating the plan 162 is executed.

The module 172 is capable of modifying the channel assigned to an access point when the identifier of this channel is deleted from the table 163.

The module 172 is capable of going through the plan 162, and verifying that the channel assigned to each access point is "usable" according to table 163.

On the contrary, the module 172 is capable of identifying in the list of channels that are usable by an access point, a channel that has not been allocated, at the current time, to one or another of the neighbouring access points of the access point considered.

This last condition provides the ability to prevent two neighbouring access points from operating at close frequencies, which could possibly result in interferences within the system 2.

The module 172 is capable of replacing, in the table 162, the channel affected by the interferences, with the free channel so identified.

When the channel assigned to an access point is modified in the plan 162, the module 172 is capable of transmitting a message for allocation of a new operating channel to the corresponding access point. This message makes possible the writing, into the space 104 of the memory storage 92 of this access point, of the identifier of the newly assigned operating channel.

When the plan 162 is modified, the module 174 for the generation of onboard allocation tables 72 is executed.

For each access point of the group Gi, the module 174 of the device 39 is capable of generating an association table 106 specific to this access point, based on the plan 162, in the following manner
- the three first virtual channels, CV1 to CV3, indicate the three operating channels of the access points of the group considered;
- when the access point considered is situated at the end of a section or is a neighbour of an access point situated at the end of the section, the fourth and fifth virtual channels CV4 and CV5 of the table 106 are used. They indicate respectively the operating channels of the access point situated at the end of the neighbouring section and of the neighbouring access point of this access point at the end of the neighbouring section.
- when the access point considered is not situated at the end of a section Si, the null value is associated with the virtual channels CV4 and CV5.

Thus, for the case of the access point 33, the table 106 includes, associated with the channels CV1, CV2, and CV3, the channels F1, F7 and F1 used by the access points 30 to 34, at the current time,.

In addition, the access point 33 being a neighbour of the access point 34 situated at the end of the section Si, the virtual channels CV4 and CV5 are entered therein. They respectively include the channels F5 and F2 used by the access point 40 situated at the end of the neighbouring section Si+1, and the access point 41 which is a neighbour of the access point 40.

The module 174 is capable of transmitting the table 106 thus generated, to the corresponding access point.

When the plan 162 is modified, the communication module 176 transmits to the control unit 50 a plan modification message for modifying the plan sent. The payload of this modification message includes the information of the plan 162 relating to the group Gi managed by the device 39.

### CONTROL UNIT

The control unit 50 enables an operator to have an overall view of the current status of operation of the infrastructure 16 and, in particular, the use of the radio spectrum along the line.

In order to ensure performance of this task, the control unit 50 receives, on a cyclical basis, the meta messages related to the report of interferences generated by the frequency management devices 29, 39, 49, by concatenating the interference report message received from the interference detection devices.

The content of the meta messages received by the control unit 50 is stored in a database.

The control unit 50 includes a configuration file for the configuration of the system 2 and a comprehensive plan for the allocation of frequencies.

The control unit 50 uses the configuration file for discovering the frequency management devices, during a phase of initialisation of the infrastructure 16, which follows the powering up thereof.

The control unit 50 requests from each frequency management device the frequency allocation plan 162 it maintains. If the latter is not identical to the one defined in the configuration file, the control unit 50 is capable of sending a default frequency allocation plan, defined in the configuration file.

The unit 50 presents the operator with a synoptic block diagram of the system 2 and offers them the possibility, by using a suitable human/machine interface, of verifying the state of a frequency management device.

Via the unit 50, at all times during the operation of the system 2, the operator can send a message to a frequency management device in order to modify its frequency allocation plan 162, with a view to optimising the use of the frequency band.

The unit 50 also provides the possibility for the operator to define the rules for modifying the allocation of frequencies automatically in case of the recurring presence of interferences in a particular channel.

The system is able to operate without the control unit 50. The latter is used in order to perform the control processes of the system in a non-intrusive manner. It does not have any control function that is activated by default.

### METHOD OF OPERATION

In a phase of initialisation, each unit or device is in charge for discovering its environment on the basis of data stored in a configuration file that is specific thereto.

After the power up, an access point is required to discover the presence of the frequency management device with which it is associated, and to inform the latter of its presence.

Each frequency management device is required to discover the frequency management devices of the neighbouring groups of access points.

Each frequency management device possesses a default frequency allocation plan 162, which enables it to transmit to each access point a default current operating channel.

The frequency management device also transmits to each access point an association table 106, which is generated based on the identifier of the access point and the default allocation plan 162.

The table 106 is stored in the memory 92 of the access point.

Upon the powering up thereof, the unit 50 checks, based on the information stored in its configuration file, which are the frequency management devices in operation.

The unit 50 requests from each frequency management device the set of current channels of the plan 162, and if necessary send a new set of current channels.

During a phase of use, the adjustment module 112 of an access point, such as the access point 33, is executed when the identifier F7 of a newly assigned current operating channel CC is written into the space 104.

Then, the module 112 adjusts accordingly the current operating channel of the radio module 110.

Once it is adjusted, the radio module 110 is capable of transmitting and receiving radio signals whose frequency is within the current operating channel F7. In particular, the radio module 110 transmits beacons for establishing or maintaining a WiFi link with a mobile equipment unit 14.

For the generation of these beacons, the module 114 of the access point 33 is executed. It reads the table 106 found, at that time, in the memory 92 and generates a beacon whose payload includes, among other things, the information relating to the allocation of the virtual channels CVi.

The beacon thus generated is transmitted to the radio module 110 in order to be emitted at regular intervals.

When the radio module 80 of a mobile unit 14, which is situated within the coverage cell of the access point 33, picks up a beacon signal emitted by this access point, it transmits it to the beacon module 82.

The execution of the beacon module 82 provides for the extraction, from the beacon received, of the information related to assignment of the virtual channels CVi. As a consequence, the module 82 updates the table 72 in the memory 62.

When the module 86 detects the imminent breaking of the currently active link with a first access point, such as for example the access point 33, it launches the execution of the channel search module 88 for searching for a channel on which to establish a new link with a second access point, that is a neighbour of the first access point, such as the access point 34.

The module 88 reads, from the zone 74 of the memory 62, the information according to which the link currently active has been established by using the channel associated with the second virtual channel CV2.

As a consequent, the module 88 consults the table 72, and reads the channel associated with the virtual channel CV3, which is the virtual channel that follows the virtual channel CV2 in the table 72.

The module 88 reads the identifier F1 and writes it into the space 70 as the value of the current operating channel CC.

This has the effect of launching the execution of the adjustment module 84, which adjusts the current operating channel of the radio module 80 at the value F1.

The radio module 80 thus set is capable of receiving the beacons emitted by an access point whose current operating channel corresponds to the channel F1.

This is the case with the beacons emitted by the access point 34, which is a neighbour of the access point 33.

When the radio module 80 receives a beacon emitted by the access point 34, it transmits it to the beacon module 82, which manages the establishment of a new link with this access point 34.

As soon as this new link is established, the switching of the communication in progress from the link with the access point 33 to the new link with the access point 34 is carried out.

In addition, the module 82 sends a "link established" message to the channel search module 88. Upon the reception of this message, the module 88 places, in the zone 74, the identifier CV3 of the virtual channel that has enabled the establishment of the new link.

When, on the contrary, after a predetermined wait time T, the module 88 has not received any "link established" message, it consults again the table 72 in order to extract the channel F5 associated with the subsequent virtual channel, CV4, and places it in the space 70 in order to search for the beacons in channel F5.

The table 72 is thus read so as to adjust the radio module in order to search for the beacons emitted by an access point with which to establish a new WiFi.

The operation in the event of interferences is as follows.

In the case, for example, where the power detection module 140 of the interference detection device 334 associated with the access point 34 detects the presence of interference in channel F1, the module 142 of the device 334 updates a report of interferences.

This latter is sent to the frequency management device 39.

The module 170 of the device 39 updates the table 164 of unusable channels with the information contained in the report received identifier of the channel F1, date of detection of interferences on this channel, and identification IP334 of the device that has detected these interferences.

If the unusable channel F1 is already in the table 164, the module 170 only updates the date information associated with the unusable channel else, that is to say, if it is a channel that is newly identified as being unusable, the module 170 adds a row to the table 164 so as to record the information related to the new unusable channel.

The module 170 then performs the update of the table 163 of usable channels CU, on the basis of the table 164. In particular, the channel F1 is removed from the tables of usable channels CU respectively associated with the access points 31 and 34.

The module 172 is then executed. The module 172 goes through the plans 162 and verifies that the channel assigned to each access point is indicated as being usable in the table 163.

The module 172 identifies that the channel F1 assigned to the access point 34 is no longer included in the list of the usable channels CU that may be used by the access point 34 as indicated in the table 163.

Among the usable channels, F7, F4, F3, the module 172 identifies, for example, that the channel F4 is not assigned either to the access point 33 or to the access point 40.

The module 172 replaces, in the table 162 for the access point 34, the channel F1 affected by the interferences, with the free channel F4.

In a similar manner, the module 172 replaces, in the table 162 for the access point 31, the channel F1 affected by the interferences, with the free channel F4.

After modification of the plan 162, the module 172 transmits allocation messages to the access points 31 and 34, respectively.

Such a message makes possible the writing into the space 104 of the memory 92 of each of the access points 31 and 34, of the channel F4 as the current operating channel. There follows, the setting of the operating channel of the radio module 110 of each of the access points 31 and 34.

After modification of the plan 162, the module 174 is executed so as to generate the association tables 106 for the access points 30 to 34 of the group Gi, in order to take into account the substitution of the channel F1, by the channel F4. Each table 106 produced as output of the module 174 is transmitted to the corresponding access point.

The access point 33 thus receives an updated table 106 in which the virtual channel CV3 is now associated with the channel F4.

The updated table 106 is used immediately for the generation, by the access point 33, of updated beacons whose payload includes the information that the virtual channel CV3 is now associated with the channel F4.

The mobile unit 14 which is connected to the access point 33 periodically receives the beacons transmitted by the access point 33. It is thus informed, upon the reception of an updated beacon, that the virtual channel CV3 is now associated with the channel F4.

The beacon module 82 updates the table 72 of the mobile equipment unit 14 by substituting, for the virtual channel CV3, the channel F4 for the channel F1.

When the breaking of the current link with the access point 33 becomes imminent, the mobile unit 14, by using the updated table 72, searches in the first place for beacons in the channel F4 associated with the virtual channel CV3.

Since the channel F4 corresponds to the current operating channel newly assigned to the access point 34, the mobile unit 14 detects the beacons emitted by the access point 34. The procedures for establishing a new link with the access point 34 and for the switching of the communication from the current link with the access point 33, over to the new link with the access point 34 may then be carried out.

By means of the transmission, via the beacons, of the information about the current operating channels of an access points located in the neighbourhood of the access point that is the sender of the beacons, the mobile unit goes through a fraction of the set of channels of the frequency band when searching for establishing a new link.

By maintaining the number of virtual channels at a low value, the transfer time for transferring the ongoing communication from the current link to the new link is reduced.

This allows for the use of a dynamic management of frequency for sensitive railway applications, such as management of the traffic over a railway network.

### ALTERNATIVE EMBODIMENTS

Many other embodiments of the system presented here above as well as of the use thereof may be envisaged.

Thus, each access point includes an interference detection device capable of measuring the power of radio waves incident on the access point and which are generated by a source external to the system. During an initial configuration phase of the infrastructure, an access point is configured in a manner so as to place its interference detection device either in an active state, or in an inactive state. Preferably, the interference detection devices of all of the access points of the infrastructure are placed in the active state during the powering up and the configuration of the system, in order to be able to detect the interferences in the immediate neighbourhood of each of the access points.

Preferably, in a simple embodiment, the interference detection device of an access point is capable of measuring the power of the incident waves in the current operating channel of this access point.

In another variant, independent of the previous one, each access point integrates a frequency management device. In an initial phase of configuration of the infrastructure, an access point is configured in a manner such that its frequency management device in placed in an active state or in an inactive state.

In a group of access points associated with a section of the network, only the frequency management device of a first access point, referred to as the primary device, and that of a second access point, referred to as the secondary device, are placed in the active state. The frequency management devices of the other access points in this group are in the inactive state.

The secondary device maintains up to date a copy of the data contained in the memory storage of the primary device. Thus, in the case of a failure of the primary device, the secondary device immediately replaces it, in a manner so as to ensure the continuity of all of the functions of the system.

## Claims

1. A WiFi communication system for the exchange of data between a railway vehicle (6), travelling over a railway network (4), and a terminal (12), on the ground, a frequency band allocated to the system being subdivided into a plurality of channels (Fi), said system comprising
- a mobile unit (14), on board the railway vehicle (6), designed for transmitting and receiving radio signals in a current operating channel; and,
- a cellular infrastructure (16), on the ground, comprising, connected to each other by means of a communication network (52):
- a plurality of access points (20 - 43), each access point being capable of transmitting and receiving radio signals and, in particular, transmitting beacons for establishing or maintaining a communication link, on a current operating channel, between said access point and a mobile unit, ,said current operating channel being adjustable;
- at least one interference detection device (28, 38, 48) for detecting interferences, which is capable of identifying the channels of the frequency band that are unusable; and,
- at least one frequency management device (29, 39, 49) for managing frequencies which is capable of assigning, based on the unusable channels, a current operating channel to each access point,
**characterised in that** for each access point, the said frequency management device (29, 39, 49) is capable of generating an association table (106), specific to the access point considered, which associates with each virtual channel (CVi) of a plurality of virtual channels, a current operating channel of an access point situated in the neighbourhood of the access point considered and of transmitting the association table to the access point considered; and **in that** each access point includes a beacon generation means for generating beacons comprising pieces of information of the association table (106) transmitted by the frequency management device;
and **in that** the mobile unit (14) is capable of extracting, from a beacon received, the said pieces of information for updating an onboard association table (72), stored by the mobile unit (14), and of using the said onboard association table (72) for searching a channel on which to establish a new communication link.

2. A system according to claim 1, wherein the frequency management device (29, 39, 49) comprises a means for the generation of an association table (106), based on the access point considered, a description of the cellular infrastructure, indicating the access points in the neighbourhood of the access point considered, and a frequency allocation plan, associating a current operating channel with each access point.

3. A system according to claim 1 or claim 2, wherein each access point includes a beacon module (114) capable of reading the association table (106), stored in the access point at the current time, and of generating a beacon including the related association information.

4. A system according to any one of claims 1 to 3, wherein the mobile unit (14) includes a beacon module (82) capable of extracting, from a beacon received, the said related association information, and of updating accordingly the said onboard association table (72).

5. A system according to any one of claims 1 to 4, in which the mobile unit (14) includes a channel searching module for searching for a channel on which to establish a new link (88) that is capable of
- reading the onboard table (72) in order for the operating channel of the mobile unit to be set to a first channel associated with a first virtual channel and,
- upon failure to establish a new link on the first channel, reading the onboard association table (72) in order for the operating channel of the mobile unit to be set to a second channel associated with a second virtual channel,
the module (88) going through the onboard association table (72) until the establishment of a link is achieved.

6. A system according to any one of claims 1 to 5, wherein the plurality of virtual channels includes N+M virtual channels, with N+M remaining small compared to the total number of channels in the frequency band, N being preferably less than 10, more preferably less than 5, for example equal to 3, and M being preferably less than 6, more preferably less than 3, for example equal to 2.

7. A system according to claim 6, wherein the onboard association table (72) of a mobile unit (14) and the association table (106) of the access points have an identical format.

8. A system according to any one of claims 1 to 7, including a plurality of frequency management devices (29, 39, 49), each frequency management device managing a group of access points (Gi-1, Gi, Gi+1) of the plurality of access points of the cellular infrastructure (16).

9. A method of use of a WiFi communication system in accordance with any one of claims 1 to 8, for the exchange of data between a railway vehicle (6), travelling over a railway network (4), and a terminal (12), on the ground, with a frequency band allocated to the system being subdivided into a plurality of channels (Fi),
**characterised in that** it includes the steps of:
- generating, by a frequency management device (29, 39, 49), for each access point, an association table (106) specific to the access point considered, which associates with each virtual channel (CVi) of a plurality of virtual channels, a current operating channel assigned to an access point that is situated in the neighbourhood of the access point considered;
- emitting, by each access point, beacons that comprise association related information corresponding to the association table (106) generated by the frequency management device
- extraction, by the mobile unit (14), of the association related information contained in a beacon received
- updating, by the mobile unit, of an onboard association table (72)
- use of the said onboard association table (72) during the search for a channel for establishing a new link.

## Patentansprüche

1. WiFi-Kommunikationssystem für den Datenaustausch zwischen einem Schienenfahrzeug (6), das auf einem Schienennetz (4) fährt, und einem Endgerät (12) am Boden, wobei ein dem System zugewiesenes Frequenzband in eine Vielzahl von Kanälen (Fi) unterteilt ist, das System umfassend
- eine mobile Einheit (14), an Bord des Schienenfahrzeugs (6), die zum Senden und Empfangen von Funksignalen in einem aktuellen Betriebskanal konstruiert ist; und,
- eine Mobilfunkinfrastruktur (16), am Boden, umfassend, miteinander verbunden durch ein Kommunikationsnetz (52):
- eine Vielzahl von Zugangspunkten (20-43), wobei jeder Zugangspunkt in der Lage ist, Funksignale zu senden und zu empfangen und insbesondere Baken zu senden, um eine Kommunikationsverbindung, auf einem aktuellen Betriebskanal, zwischen dem Zugangspunkt und einer mobilen Einheit herzustellen oder aufrechtzuerhalten, wobei der aktuelle Betriebskanal einstellbar ist;
- mindestens eine Interferenzerfassungsvorrichtung (28, 38, 48) zum Erfassen von Interferenzen, die in der Lage ist, die Kanäle des Frequenzbands zu identifizieren, die unbenutzbar sind; und,
- mindestens eine Frequenzverwaltungsvorrichtung (29, 39, 49) zum Verwalten von Frequenzen, die in der Lage ist, jedem Zugangspunkt basierend auf den nicht benutzbaren Kanälen einen aktuellen Betriebskanal zuzuweisen,
**dadurch gekennzeichnet, dass** die Frequenzverwaltungsvorrichtung (29, 39, 49) in der Lage ist, für jeden Zugangspunkt eine für den betrachteten Zugangspunkt spezifische Assoziationstabelle (106) zu erzeugen, die mit jedem virtuellen Kanal (CVi) einer Vielzahl von virtuellen Kanälen einen aktuellen Betriebskanal eines in der Nähe des betrachteten Zugangspunkts befindlichen Zugangspunkts assoziiert, und die Assoziationstabelle an den betrachteten Zugangspunkt zu senden;
und dass jeder Zugangspunkt eine Baken-Erzeugungseinrichtung zum Erzeugen von Baken beinhaltet, die von der Frequenzverwaltungsvorrichtung gesendete Informationen der Assoziationstabelle (106) umfassen;
und, dass die mobile Einheit (14) in der Lage ist, aus einer empfangenen Bake die genannten Informationen zu extrahieren, um eine von der mobilen Einheit (14) gespeicherte Bord-Assoziationstabelle (72) zu aktualisieren und die genannte Bord-Assoziationstabelle (72) zu verwenden, um einen Kanal zu suchen, auf dem eine neue Kommunikationsverbindung hergestellt werden kann.

2. System nach Anspruch 1, wobei die Frequenzverwaltungsvorrichtung (29, 39, 49) eine Einrichtung zur Erzeugung einer Assoziationstabelle (106) umfasst, die auf dem betrachteten Zugangspunkt, einer Beschreibung der Mobilfunkinfrastruktur, die die Zugangspunkte in der Nachbarschaft des betrachteten Zugangspunkts angibt, und einem Frequenzzuweisungsplan, der jedem Zugangspunkt einen aktuellen Betriebskanal zuordnetbasiert.

3. System nach Anspruch 1 oder Anspruch 2, wobei jeder Zugangspunkt ein Bakenmodul (114) beinhaltet, das in der Lage ist, die Assoziationstabelle (106) zu lesen, die an dem aktuellen Zeitpunkt in dem Zugangspunkt gespeichert ist, und eine Bake zu erzeugen, die die zugehörigen Assoziationsinformationen beinhaltet.

4. System nach einem der Ansprüche 1 bis 3, wobei die mobile Einheit (14) ein Bakenmodul (82) beinhaltet, das in der Lage ist, aus einer empfangenen Bake die genannten zugehörigen Assoziationsinformationen zu extrahieren und die Bord-Assoziationstabelle (72) entsprechend zu aktualisieren.

5. System nach einem der Ansprüche 1 bis 4, wobei die mobile Einheit (14) ein Kanalsuchmodul beinhaltet, um einen Kanal zu suchen, auf dem eine neue Verbindung (88) aufgebaut werden soll, die zu Folgendem in der Lage ist
- Lesen der Bord-Tabelle (72), damit der Betriebskanal der mobilen Einheit auf einen ersten Kanal eingestellt wird, der mit einem ersten virtuellen Kanal assoziiert ist, und,
- bei einem Scheitern des Aufbauens einer neuen Verbindung auf dem ersten Kanal, Lesen der Bord-Assoziationstabelle (72), damit der Betriebskanal der mobilen Einheit auf einen zweiten Kanal eingestellt wird, der mit einem zweiten virtuellen Kanal assoziiert ist,
wobei das Modul (88) die Bord-Assoziationstabelle (72) durchläuft, bis der Aufbau einer Verbindung erreicht ist.

6. System nach einem der Ansprüche 1 bis 5, wobei die Vielzahl der virtuellen Kanäle N+M virtuelle Kanäle beinhaltet, wobei N+M im Vergleich zu der Gesamtzahl der Kanäle in dem Frequenzband klein bleibt, wobei N vorzugsweise weniger als 10, bevorzugter weniger als 5, beispielsweise gleich 3 ist, und M vorzugsweise weniger als 6, bevorzugter weniger als 3, beispielsweise gleich 2 ist.

7. System nach Anspruch 6, wobei die Bord-Assoziationstabelle (72) einer mobilen Einheit (14) und die Assoziationstabelle (106) der Zugangspunkte ein identisches Format aufweisen.

8. System nach einem der Ansprüche 1 bis 7, das eine Vielzahl von Frequenzverwaltungsvorrichtungen (29, 39, 49) beinhaltet, wobei jede Frequenzverwaltungsvorrichtung eine Gruppe von Zugangspunkten (Gi-1, Gi, Gi+1) der Vielzahl von Zugangspunkten der Mobilfunkinfrastruktur (16) verwaltet.

9. Verfahren zur Verwendung eines WiFi-Kommunikationssystems nach einem der Ansprüche 1 bis 8 für den Datenaustausch zwischen einem Schienenfahrzeug (6), das auf einem Schienennetz (4) fährt, und einem Endgerät (12) am Boden, wobei ein dem System zugewiesenes Frequenzband in eine Vielzahl von Kanälen (Fi) unterteilt ist,
**dadurch gekennzeichnet, dass** es die folgenden Schritte beinhaltet:
- Erzeugen, durch eine Frequenzverwaltungsvorrichtung (29, 39, 49), für jeden Zugangspunkt, einer für den betrachteten Zugangspunkt spezifischen Assoziationstabelle (106) die mit jedem virtuellen Kanal (CVi) einer Vielzahl von virtuellen Kanälen einen aktuellen Betriebskanal assoziiert, der einem Zugangspunkt zugewiesen ist, der sich in der Nähe des betrachteten Zugangspunkts befindet;
- Aussenden, durch jeden Zugangspunkt, von Baken, die assoziationsbezogene Informationen entsprechend der von der Frequenzverwaltungsvorrichtung erzeugten Assoziationstabelle (106) umfassen
- Extraktion der in einer empfangenen Bake enthaltenen assoziationsbezogenen Informationen durch die mobile Einheit (14)
- Aktualisieren einer Bord-Assoziationstabelle (72) durch die mobile Einheit
- Verwenden der Bord-Assoziationstabelle (72) bei der Suche nach einem Kanal zum Aufbauen einer neuen Verbindung.

## Revendications

1. Système de communication WiFi pour l'échange de données entre un véhicule ferroviaire (6), circulant sur un réseau (4), et un terminal (12), au sol, une bande de fréquences allouée au système étant subdivisée en une pluralité de canaux (Fi), du type comportant :
- un équipement mobile (14), embarqué à bord du véhicule (6), conçu pour émettre et recevoir des signaux radioélectriques dans un canal de fonctionnement courant qui est réglable ; et,
- une infrastructure cellulaire (16), fixe au sol, comportant, reliés entre eux par un réseau de communication (52) :
- une pluralité de points d'accès (20 à 43), chaque point d'accès étant conçu pour émettre et recevoir des signaux radioélectriques et, en particulier, des balises pour établir ou maintenir une liaison de communication entre ledit point d'accès et ledit équipement mobile, sur un canal de fonctionnement courant qui est réglable ;
- au moins un dispositif de détection d'interférences (28, 38, 48) propre à identifier des canaux de la bande de fréquences allouée qui sont inutilisables ; et,
- au moins un dispositif de gestion des fréquences (29, 39, 49) qui est propre à attribuer, en fonction des canaux inutilisables, un canal de fonctionnement courant à chaque point d'accès,
**caractérisé en ce que** ledit dispositif de gestion des fréquences (29, 39, 49) est propre, pour chaque point d'accès, à générer une table d'association (106) spécifique au point d'accès considéré, qui associe à chaque canal virtuel (CVi) d'une pluralité de canaux virtuels, un canal de fonctionnement courant d'un point d'accès situé dans le voisinage du point d'accès considéré, et à transmettre la table d'association ainsi générée au point d'accès considéré,
**en ce que** chaque point d'accès comporte un moyen de génération de balises propre à intégrer, dans une balise, des informations de la table d'association (106) transmise par le dispositif de gestion des fréquences,
et **en ce que** l'équipement mobile (14) est capable d'extraire, d'une balise reçue, lesdites informations pour mettre à jour une table d'association embarquée (72), mémorisée par l'équipement mobile (14), et à utiliser ladite table d'association embarquée (72) pour la recherche d'un canal sur lequel établir une nouvelle liaison de communication.

2. Système selon la revendication 1, dans lequel le dispositif de gestion des fréquences (29, 39, 49) comporte un moyen de génération d'une table d'association (106) en fonction du point d'accès considéré, d'une description de l'infrastructure, indiquant les points d'accès situés dans le voisinage du point d'accès considéré, et d'un plan de répartition des fréquences, associant à chaque point d'accès un canal de fonctionnement courant.

3. Système selon la revendication 1 ou la revendication 2, dans lequel chaque point d'accès comporte un module de balises (114) propre à consulter la table d'association (106) mémorisée par le point d'accès à l'instant courant et à générer une balise comportant les informations d'association.

4. Système selon l'une quelconque des revendications 1 à 3, dans lequel l'équipement mobile (14) comporte un module de balises (82) propre à extraire d'une balise reçue, lesdites information d'association et à mettre à jour en conséquence ladite table d'association embarquée (72).

5. Système selon l'une quelconque des revendications 1 à 4, dans lequel l'équipement mobile (14) comporte un module de recherche d'un canal sur lequel établir une nouvelle liaison (88) qui est capable de :
- consulter la table d'association embarquée (72) afin que le canal de fonctionnement de l'équipement mobile soit réglé sur un premier canal associé à un premier canal virtuel ; et,
- à défaut d'établissement d'une nouvelle liaison sur le premier canal, consulter la table d'association embarquée (72) afin que le canal de fonctionnement de l'équipement mobile soit réglé sur un second canal associé à un second canal virtuel,
le module (88) étant ainsi apte à parcourir la table d'association embarquée (72) jusqu'à établissement d'une liaison.

6. Système selon l'une quelconque des revendications 1 à 5, dans lequel la pluralité de canaux virtuels comporte N+M canaux virtuels, N+M restant petit par rapport au nombre total de canaux dans la bande de fréquences allouée, N étant de préférence inférieur à 10, de préférence encore inférieur à 5, par exemple égal à 3, et M étant de préférence inférieur à 6, de préférence encore inférieur à 3, par exemple égal à 2.

7. Système selon la revendication 6, dans lequel la table d'association embarquée (72) d'un équipement mobile (14) et les tables d'association (106) des points d'accès ont un format identique.

8. Système selon l'une quelconque des revendications 1 à 7, comportant une pluralité de dispositifs de gestion des fréquences (29, 39, 49), chaque dispositif de gestion des fréquences gérant un groupe de points d'accès (Gi-1, Gi, Gi+1) de la pluralité de points d'accès de l'infrastructure cellulaire (16).

9. Procédé d'utilisation d'un système de communication WiFi conforme à l'une quelconque des revendications 1 à 8, pour l'échange de données entre un véhicule ferroviaire (6), circulant sur un réseau (4), et un terminal (12), au sol, une bande de fréquences allouée au système étant subdivisée en une pluralité de canaux (Fi), caractérisé en ce_qu'il comporte les étapes de :
- génération, par le dispositif de gestion des fréquences (29, 39, 49), pour chaque point d'accès, d'une table d'association (106) spécifique du point d'accès considéré, associant à chaque canal virtuel (CVi) d'une pluralité de canaux virtuels, un canal de fonctionnement courant attribué à un point d'accès situé dans le voisinage du point d'accès considéré,
- émission, par chaque point d'accès, de balises intégrant des informations d'association correspondant à la table d'association (106) générée par le dispositif de gestion des fréquences,
- extraction, par l'équipement mobile (14), des informations d'association contenues dans une balise reçue ;
- mise à jour, par l'équipement mobile, d'une table d'association embarquée (72) ;
- utilisation de ladite table d'association embarquée (72) lors d'une recherche d'un canal pour l'établissement d'une nouvelle liaison.
